# EUROPÄISCHE PATENTANMELDUNG

(11) **EP 2 151 286 A2**
(43) Veröffentlichungstag der Anmeldung: **10.02.2010**
(21) Anmeldenummer: 09009732.0
(22) Anmeldetag: 28.07.2009
(51) Int. Cl.: B21D 51/44, B65G 15/14, B21D 43/12

(54) **Einrichtung und Verfahren zur Herstellung von Deckeln mit Aufreissfolie**

(30) Priorität: 07.08.2008 CH 12332008
(71) Anmelder: Soudronic AG, 8962 Bergdietikon (CH)
(72) Erfinder: Gysi, Peter, 5454 Bellikon (CH); Taiana, Peter, 5432 Neuenhof (CH); Raas, Rene, 8951 Fahrweid (CH)
(74) Vertreter: Schalch, Rainer

(57) **Zusammenfassung**

Bei der Herstellung von Deckeln mit Aufreissfolie werden die Deckelrohlinge bzw. Deckel während des Transports und der Bearbeitung stets durch Sicherungsmittel gegen ein unerwünschtes abheben vom Transportmittel gesichert. Dies erlaubt eine sehr hohe Herstellungskadenz auch für leichte Deckel und insbesondere Aluminiumdeckel.

## Beschreibung

Die Erfindung betrifft eine Einrichtung zur Herstellung von Deckeln mit Aufreissfolie, umfassend ein lineares Transportmittel für den Horizontaltransport entlang des Herstellungswegs, in welchem die Deckel entlang eines Teils des Herstellungswegs durch eine Führung gegen ein Abheben in vertikaler Richtung gesichert sind, mindestens einen am Anfang des Transportmittels angeordneten Abstapler, welcher Deckelrohlinge von mindestens einem Stapel an das Transportmittel abgibt, eine entlang des Transportmittels angeordnete Abfolge von Bearbeitungsstationen, gegebenenfalls unterbrochen von einer Wendestation, und eine Auslaufstation am Ende des linearen Transportmittels. Ferner betrifft die Erfindung ein Verfahren zur Herstellung von Deckeln mit Aufreissfolie.

### Stand der Technik

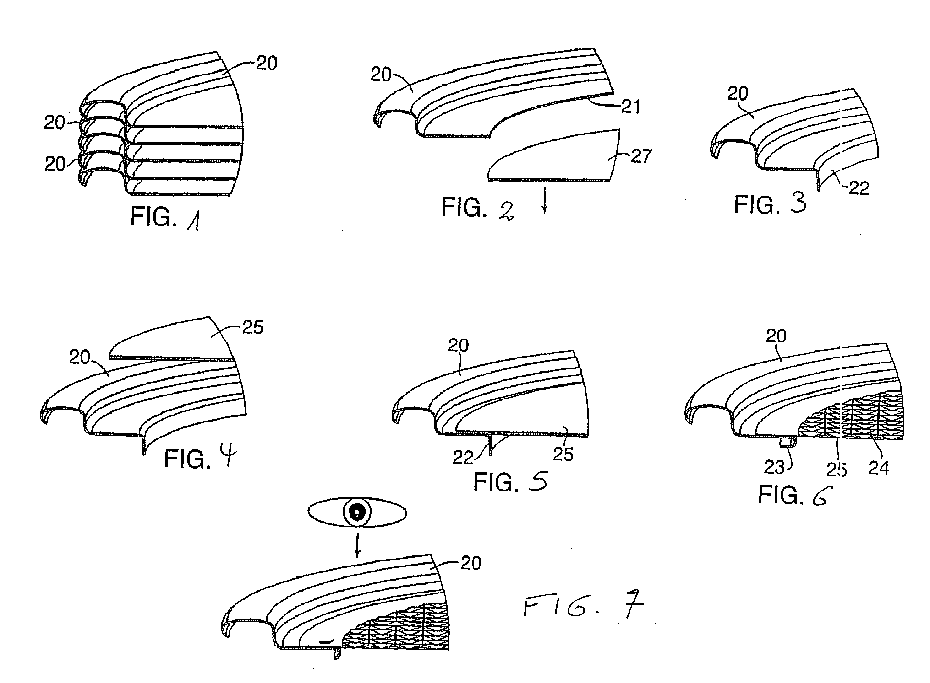

Es ist bekannt, Deckel für dosen- oder büchsenartige Verpackungen als auf der Verpackung oberseitig permanent befestigte Metalldeckel auszuführen, die eine Entnahmeöffnung ausbilden, die bis zum ersten Gebrauch des Verpackungsinhaltes durch eine durch Heisssiegelung aufgebrachte, abreissbare Folie, insbesondere Metallfolie, verschlossen ist. Ein zusätzlicher, über dem Metalldeckel angeordneter Deckel aus Kunststoff macht die Verpackung während der Verbrauchsdauer für deren Inhalt wieder verschliessbar. Herstellungsschritte bei der Herstellung von solchen sogenannten Aufreissdeckeln werden nachfolgend an Hand der Figuren 1 bis 7 erläutert. Eine Einrichtung der oben genannten Art zur Herstellung von Aufreissdeckeln ist aus WO 2006/017953 bekannt. Diese umfasst ein lineares Transportmittel für den Transport der Deckel in der Einrichtung entlang von deren Herstellungsweg, wobei das Transportmittel die Deckel bei der horizontalen linearen Bewegung während eines Teils des Transportweges gegen ein Abheben aus der Deckelaufnahme mechanisch oder magnetisch sichert.

### Darstellung der Erfindung

Die erwähnte Einrichtung hat sich bewährt und erlaubt die Herstellung von herkömmlichen Deckeln aus Stahlblech mit hoher Kadenz, welche z.B. bei 200 Deckeln pro Minute liegen kann. Es ist wünschenswert solche Kadenzen auch bei sehr leichten Deckeln aus Leichmetall, insbesondere Aluminium, zu erreichen.

Diese Aufgabe wird bei der eingangs genannten Einrichtung dadurch gelöst, dass vom Abstapler bis zur Auslaufstation durchgehend wirksame Sicherungsmittel für die als Rohling bis zum fertigen Deckel durch die Einrichtung geförderten Deckel vorgesehen sind, welche Sicherungsmittel die Deckelteile stets gegen ein unerwünschtes Abheben vom Transportmittel sichern.

Durch das entlang des Herstellungswegs durchgehende Sichern der intermittierend bewegten, durch die Einrichtung laufenden Deckelteile, also insbesondere eine Sicherung in den Bearbeitungsstationen sowie auch im Übergang vom Abstapler zum linearen Transportmittel und in der Auslaufstation, können auch sehr leichte Deckel mit sehr hoher Kadenz hergestellt werden. Bei solchen Deckeln besteht bei den herkömmlichen Einrichtungen durch das ständige Anfahren und Stoppen des Transportmittels oder durch geringfügige äussere Einflüsse die Gefahr, dass die Deckel aus ihren Aufnahmen im Transportmittel im Bereich der Bearbeitungsstationen herausspringen, was zu einem Herstellungsunterbruch führen kann.

Bei einer bevorzugten Einrichtung sind die Sicherungsmittel durch eine Kombination aus feststehenden Sicherungselementen und beweglichen Sicherungselementen, und insbesondere auch durch mittels Unterdruck wirkende Sicherungselemente, ausgeführt. Die Kombination von verschieden Sicherungsmitteln bzw. Sicherungselementen ergibt eine besonders gut an die Deckelherstellung angepasste durchgehende Zwangsführung der Deckelteile bzw. Deckel. Diese ist bevorzugt beim Abstapler durch Unterdruck sowie mittels Niederhaltern ausgeführt, was die sichere, den Deckelrohling stets haltende Übergabe vom Abstapler an das lineare Transportmittel bzw. Fördermittel ermöglicht. Bevorzugt sind dann in Bearbeitungsstationen bewegliche Sicherungselemente als Sicherungsmittel vorgesehen, was eine stets sichere Halterung der Deckelteile mit den Bewegungsanforderungen durch die Bearbeitungsstation in Einklang bringt. Insbesondere sind die beweglichen Sicherungselemente durch federnd im oberen Werkzeugteil angeordnete, sich in Transportrichtung erstreckende Schienen gebildet und kommen insbesondere in der Schneidstation bzw. Stanzstation vor, in welcher die Entnahmeöffnung aus dem Deckelrohling ausgeschnitten wird. Ebenso können in einer Ziehstation und/oder einer Rollstation und/oder in einer Prägestation bewegliche Sicherungselemente vorgesehen sein.

Beim Transportmittel selber wird die Zwangsführung insbesondere durch beidseitig der Transportlängsachse liegende, feststehende Abdeckelemente mit zu den Deckelteilen nach unten gebogenen Sicherungsstegen gebildet, so z.B. in einer zwischen der Schneidstation und der Ziehstation liegenden Beölungsstation und auch entlang von Förderabschnitten für die Deckelteile, in denen keine Bearbeitung stattfindet. Sofern eine Wendestation vorgesehen ist, können z.B. feststehende Einlaufsegmente als Sicherungsmittel für die Übergabe vom linearen Transportmittel an die Wendestation vorgesehen sein.

Besonders an der Folienstanz- und Vorsiegelstation sind bevorzugt sowohl feststehende als auch bewegliche Sicherungselemente als Sicherungsmittel bzw. Zwangsführung vorgesehen, welche im Bereich des oberen Siegelwerkzeugs als bewegliche Sicherungselemente in Vertikalrichtung gefedert verschiebbare Schienen aufweisen und als feststehende Sicherungselemente Niederhalter aufweisen, während im unteren Siegelwerkzeug eine mittels Unterdruck wirkende Festhaltung bzw. Zwangsführung vorgesehen, was in diesem für die Herstellung besonders wichtigen Schritt eine hohe Zuverlässigkeit der steten Festhaltung auch sehr leichter Deckelteile ergibt. Die gefederten beweglichen Sicherungselemente wirken zudem als Ausstosser aus dem Oberwerkzeug nach der Bearbeitung des Deckelteils.

Auch in der Hauptsiegelstation sind bevorzugt feststehende und bewegliche Sicherungselemente vorgesehen, welche bevorzugt in derselben Kombination vorgesehen sind, wie in der Vorsiegelstation.

Falls eine Inspektionsstation zur Prüfung der Siegelnaht, insbesondere zur Prüfung mittels Wärmebildauswertung, vorgesehen ist, werden die Sicherungsmittel bzw. wird die Zwangsführung bevorzugt durch eine Unterdruckführung gebildet, was die Betrachtung des Siegelbereichs nicht stört.

Bevorzugt sind zur Bildung der jeweiligen Aufnahme für die Deckelteile am linearen Transportmittel Mitnehmer, insbesondere in der Form von an Zahnriemen angeordneten Mitnehmernocken auf jeder Seite der Längsmittelachse des Transportmittels mit zueinander unterschiedlichen Abständen angeordnet, so dass sich abwechselnd entlang des Transports Aufnahmen für zwei verschieden grosse Deckelteile ergeben. Dies erlaubt die Verwendung der Einrichtung für Deckelteile unterschiedlichen Durchmessers ohne Umrüstung der Einrichtung, indem jeweils nur die passenden Aufnahmen beschickt werden und die anderen Aufnahmen leer bleiben. Das Transportmittel führt dann Transportschritte mit doppelter Länge aus, so dass jeweils nur die mit Deckelteilen beschickten Aufnahmen der einen Grösse stationär in den Bearbeitungsstationen zu liegen kommen und die anderen, leeren Aufnahmen der anderen Grösse im Wesentlichen ohne Stopp durch die Bearbeitungsstationen hindurch transportiert werden.

Der Erfindung liegt weiter die Aufgabe zu Grunde ein Verfahren zur Herstellung von Aufreissdeckeln zu verbessern.

Dies erfolgt bei einem Verfahren zur Herstellung von Deckeln mit Aufreissfolie auf einer linearen Herstellungseinrichtung, auf welcher die Deckelrohlinge und Deckel abgestapelt und gefördert und dabei geschnitten, gegebenenfalls geölt, gezogen, gerollt und danach gegebenenfalls gewendet werden, worauf die Aufreissfolie aufgebracht und vorgesiegelt wird, eine Hauptsiegelung, gegebenenfalls eine Inspektion, eine Kühlung, eine Ausrichtung der Aufreisslasche und eine Prüfung erfolgt, dadurch, dass während dieser Schritte stets ein Sichern gegen ein ungewolltes Abheben der Rohlinge bzw. Deckel aus deren Aufnahme am Transportmittel durch Sicherungsmittel erfolgt.

Bevorzugt wird bei dem Verfahren das Halten durch feststehende Sicherungselemente und durch bewegliche Sicherungselemente, und insbesondere auch durch mittels Unterdruck wirkenden Sicherungselementen, ausgeführt.

Insbesondere erfolgt das Sichern beim Abstapler durch Unterdruck sowie mittels Niederhaltern und in Bearbeitungsstationen werden bewegliche Sicherungselemente für das Sichern verwendet. Dabei erfolgt z.B. die Führung bzw. das Festhalten des Deckelteils durch federnd im oberen Werkzeugteil angeordnete Sicherungsteile, was besonders in einer Schneidstation und/oder einer Ziehstation und/oder einer Rollstation und/oder in einer Prägestation vorteilhaft ist. Insbesondere erfolgt ferner das Sichern in einer zwischen einer Schneidstation und einer Ziehstation liegenden Beölungsstation durch feststehende Sicherungselemente, insbesondere durch beidseitig der Transportlängsachse liegende Abdeckelemente mit Führungsnasen.

Beim Folienstanzen und beim Vorsiegeln werden bevorzugt feststehende und bewegliche Sicherungselemente für das Sichern gegen das Abheben verwendet, wobei insbesondere im Bereich des oberen Siegelwerkzeugs als bewegliche Sicherungselemente federnd im Werkzeug angeordnete Ausstosskufen oder Schienen und als feststehende Sicherungselemente Niederhalter vorgesehen sind und als Zwangsführung im unteren Siegelwerkzeug eine mittels Unterdruck wirkende Festhaltung verwendet wird. Diese kann z.B. durch eine gesteuerte Luftzufuhr unterbrochen werden.

Auch bei der Hauptsiegelung werden bevorzugt feststehende und bewegliche Sicherungselemente zum Halten vorgesehen, insbesondere werden im Bereich des oberen Siegelwerkzeugs als bewegliche Sicherungselemente Ausstosskufen und als feststehende Sicherungselemente Niederhalter verwendet und das Halten erfolgt im unteren Siegelwerkzeug mittels Unterdruck, welcher insbesondere durch eine gesteuerte Luftzufuhr unterbrechbar ist.

Falls eine Inspektionsstation zur Prüfung, insbesondere zur optischen Prüfung, der Siegelnaht vorgesehen ist, wird das Sichern bevorzugt durch Unterdruck ausgeführt. Bei einer Kühl- und Laschenrichtstation wird bevorzugt so vorgegangen, dass an einem unteren Drehteller das Festhalten des Deckels mittels Unterdruck erfolgt.

Beim linearen Transportmittel mit an umlaufenden Riemen, Bändern oder Ketten angeordneten Mitnehmern wird die Zwangsführung bevorzugt durch beidseits der Längsmittelachse des Transportmittels oberhalb der Transportebene angeordnete Abdeckplatten mit nach unten weisenden Sicherungsstegen ausgeführt. Dabei sind bevorzugt die Mitnehmer, bzw. die Mitnehmernocken, auf jeder Seite der Längsmittelachse mit zueinander unterschiedlichen Abständen bzw. Nockenabständen angeordnet.

### Kurze Beschreibung der Zeichnungen

Im Folgenden wird der Stand der Technik und werden Ausführungsbeispiele der Erfindung anhand der Zeichnungen näher erläutert. Dabei zeigt
Figur 1 bis Figur 7 Sektoren von Aufreissdeckeln zur Erläuterung von Schritten zu deren Herstellung;
Figur 8 eine vereinfachte Seitenansicht einer Einrichtung zur Herstellung von Aufreissdeckeln mittels einer anderen Reihenfolge von Schritten;
Figur 9 eine Draufsicht auf die Einrichtung von Figur 8;
Figur 10 eine schaubildliche Darstellung der Einrichtung von Figur 8;
Figur 11 eine schaubildliche Ansicht eines Ausführung des Transportmittels, wie aus dem Stand der Technik bekannt;
Figur 12 eine schaubildliche Ansicht der Aufnahmen für die Deckelrohlinge bzw. Deckel am Transportmittel;
Figur 13 eine Vertikalschnittdarstellung eines Teils des Transportmittels mit der Abdeckung mit nach unten gebogenem Steg zur Sicherung;
Figur 14 eine Vertikalschnittdarstellung eines Teils der Schneidbearbeitungsstation mit beweglichen Sicherungselementen im Oberwerkzeug;
Figur 15 eine Vertikalschnittdarstellung eines Teils der Bearbeitungsstation für das Ziehen des Randes der Entnahmeöffnung;
Figur 16 einen Teil einer Bearbeitungsstation für das Rollen des gezogenen Randes in teilweiser Darstellung in Vertikalschnittansicht;
Figur 17 eine Vertikalschnittansicht eines Teils einer Bearbeitungsstation für das Ausstanzen der Aufreissfolie und das Vorsiegeln derselben auf dem Deckelring;

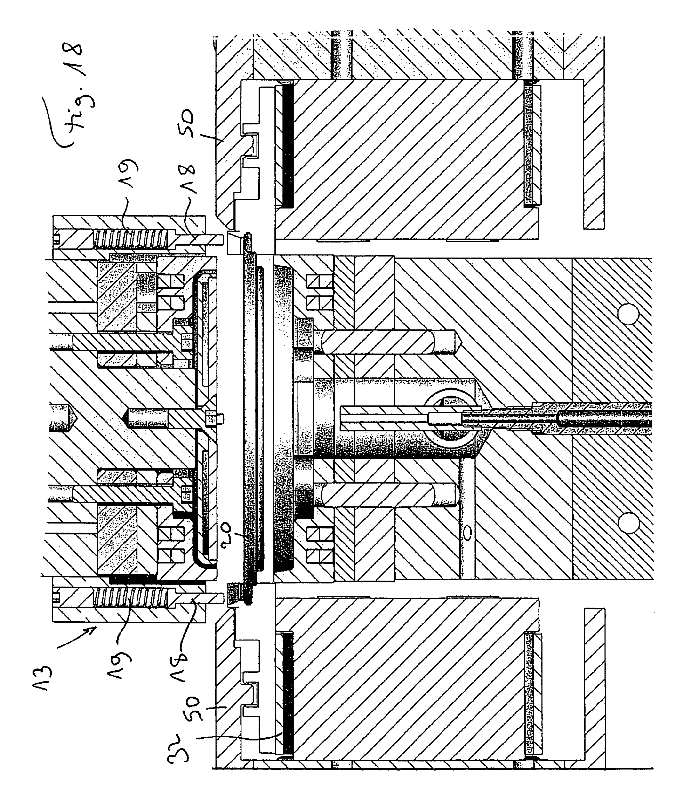

Figur 18 eine Vertikalschnittansicht eines Teils einer Bearbeitungsstation für das Hauptsiegeln;
Figur 19 eine seitliche Schnittansicht der Sicherung mittels Unterdruck im Bereich einer Inspektion der Deckel;
Figur 20 die Bearbeitungsstation zum Kühlen und mit Drehteller und zum Ausrichten der Aufreisslaschen;
Figur 21 eine Darstellung des Transportmittels mit Mitnehmernocken, die unterschiedliche Abstände voneinander aufweisen und somit Aufnahmen für verschieden grosse Deckel auf demselben Zahnriemen bilden.

### Wege zur Durchführung der Erfindung

An Hand der Figuren 1 bis 7 wird kurz der Stand der Technik zur Herstellung von Metalldeckeln mit Aufreissfolie erläutert. Figur 1 zeigt gestapelte, metallene Deckelrohlinge 20 als Beispiel für Gegenstände, wie sie im Stapel vorliegen. Diese Rohlinge 20 sind z.B. runde Metallscheiben von z.B. 11 cm Durchmesser. Natürlich sind andere Grundformen, z.B. quadratische oder rechteckige Scheiben und andere Durchmesser ohne weiteres möglich. Die Rohlinge 20 sind bereits vorgängig in einer nicht dargestellten Bearbeitungsmaschine an ihrem Rand wie in Figur 1 gezeigt vorgeformt worden. In der Figur 1 und den nachfolgenden Figuren ist jeweils nur ein Sektor der ganzen Scheibe dargestellt, um die Zeichnungen zu vereinfachen. Zunächst werden die Deckelrohlinge 20 durch einen Abstapler einzeln vom Stapel freigegeben und an Aufnahmen, insbesondere mit Aufnahmenocken, des linearen Fördermittels abgegeben, welches die Deckelrohlinge und späteren Deckel schrittweise transportiert und zu den einzelnen Bearbeitungsstationen bringt, bei welchen die lineare Förderung jeweils unterbrochen wird, damit die Bearbeitung erfolgen kann. Nach erfolgter Bearbeitung wird dann ein weiterer Transport bis zur nächsten Bearbeitungsstation ausgeführt. In der ersten Bearbeitungsstation, die nachfolgend jeweils als Schneidstation bezeichnet wird, wird durch eine Stanzbearbeitung mit Ober- und Unterwerkzeug eine Öffnung in die Scheibe gestanzt, was in Figur 2 ersichtlich ist, in welcher der Rand der Öffnung mit 21 bezeichnet ist und die ausgestanzte runde Scheibe mit 27, welche als Abfall entsorgt wird. Die Schneidstation wird - wie dies auch bei den weiteren Stationen der Fall ist - durch einen Antrieb angetrieben. Bei der nächsten Bearbeitungsstation entlang des linearen Transportweges kann ein Oelen für die nachfolgenden Bearbeitungsschritte erfolgen und dann erfolgt in der nächsten Bearbeitungsstation ein Ziehen des Randes 21 in der Figur nach unten, wodurch der in Figur 3 gezeigte Verlauf 22 des Randes erzielt wird (bei einer abgewandelten, nachfolgenden Ausführung, bei welcher die Deckelrohlinge anfänglich um 180 Grad gewendet liegen, würde indes das Ziehen in der Figur "nach oben" erfolgen). Die ringförmigen Deckelrohlinge 20 gelangen dann in eine Bearbeitungsstation, in welcher eine Folie über der Öffnung des Deckels 20 plaziert und dort durch Heissversiegelung befestigt wird, was in den Figuren 4 und 5 ersichtlich ist. Die Folie 25 kann eine Metallfolie, eine Kunststofffolie oder eine Verbundfolie aus Metall und Kunststoff sein. Die Folie 25 ist dazu auf bekannte Weise an ihrer Unterseite mit einer sigelfähigen Kunststoffschicht versehen. Der benötigte runde Folienzuschnitt 25 wird in der Regel in der Heissversiegelungsstation selber aus einer breiten Folienbahn ausgestanzt und über der Mittelausnehmung der ringförmigen Scheibe plaziert und durch die Heissversiegelungsstation wird die Folie unter Hitzeeinwirkung am Rand der runden Ausnehmung des Teils 20 unter Hitzeeinwirkung angepresst, so dass die Folie 25 mit dem metallenen Deckel 20 durch Aufschmelzen und nachfolgendes Abkühlen der Kunststoffschicht dicht verbunden wird. Dies ist bekannt und wird hier nicht näher erläutert. Insbesondere können die Schritte auch in zwei Stationen ausgeführt werden, wobei in einer Station ein Stanzen der Folie und eine Vorsiegelung derselben am Deckelring erfolgt und in einer nachfolgenden Hauptsiegelstation die endgültige Siegelung. Zur Abkühlung kann eine Kühlbearbeitungsstation vorgesehen sein. In einer weiteren Bearbeitungsstation wird die Folie 25 mit einer Prägung 24 (Figur 6) versehen, und es wird weiter der Rand 22 zum fertigen Rand 23 umgebördelt (in der nachfolgend beschriebenen Ausführungsform erfolgt dieser Bördel- bzw. Rundungsschritt indes direkt nach dem Ziehen des Randes). In einer ebenfalls als Bearbeitungsstation zu bezeichnenden Prüfstation werden die Deckel einer Prüfung unterzogen, welche eine Dichteprüfung für die auf dem Deckel aufgebrachte Abziehfolie 25 umfassen kann und/oder eine optische Prüfung mittels einer Wärmebildkamera, die ungenügend erhitzte Teile der Siegelnaht feststellen kann. Ist die Folie dicht auf dem restlichen Metalldeckel befestigt, so gelangt der Deckel in die Auslaufstation für die fertigen Deckel. Wird eine Undichtigkeit festgestellt, so gelangt der Deckel z.B. über eine Rutsche, in einen Abfallbehälter oder es erfolgt eine entsprechende Ausscheidung am Ausgang der Auslaufstation.

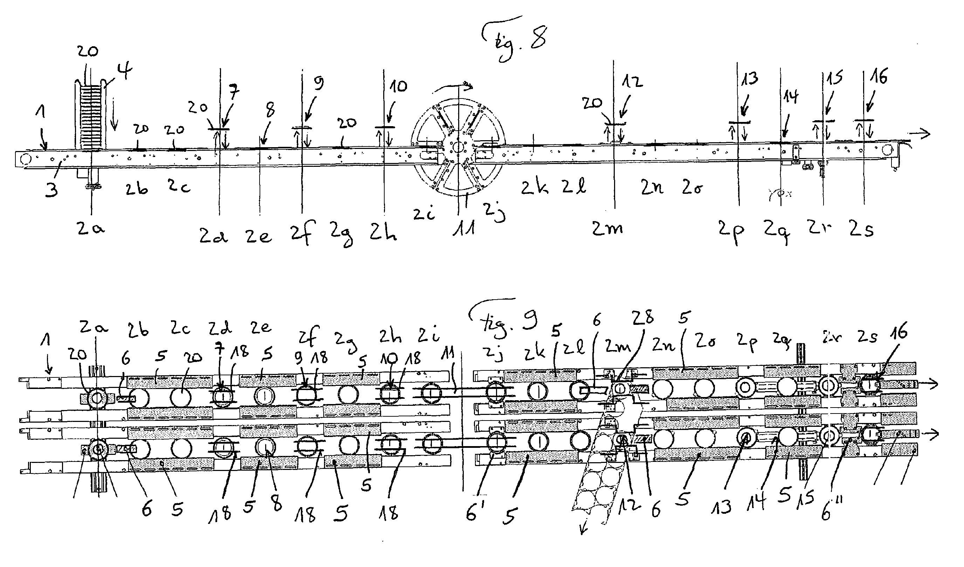

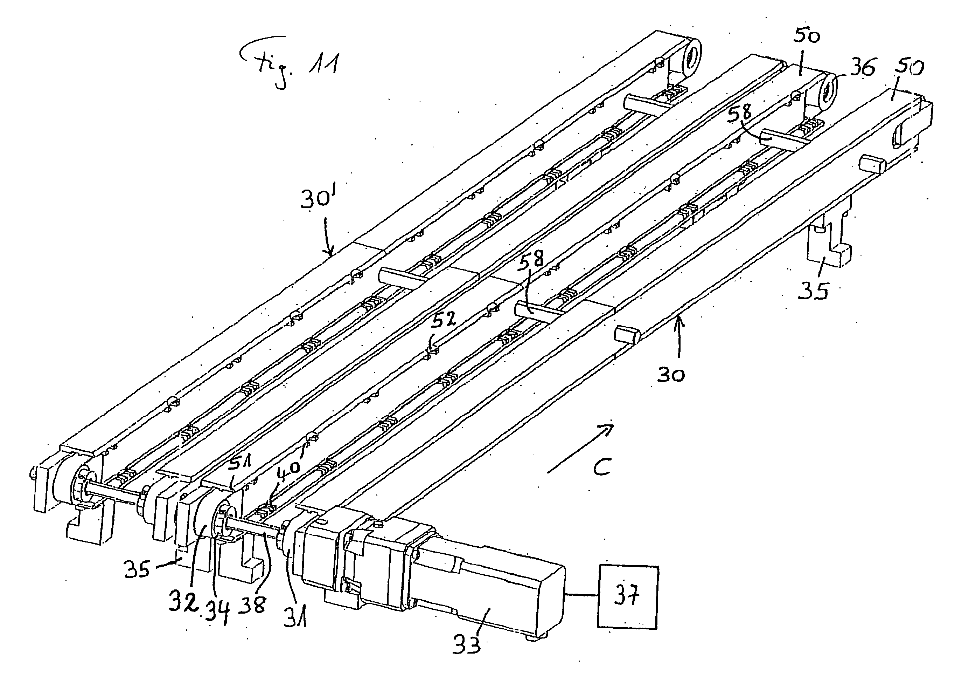

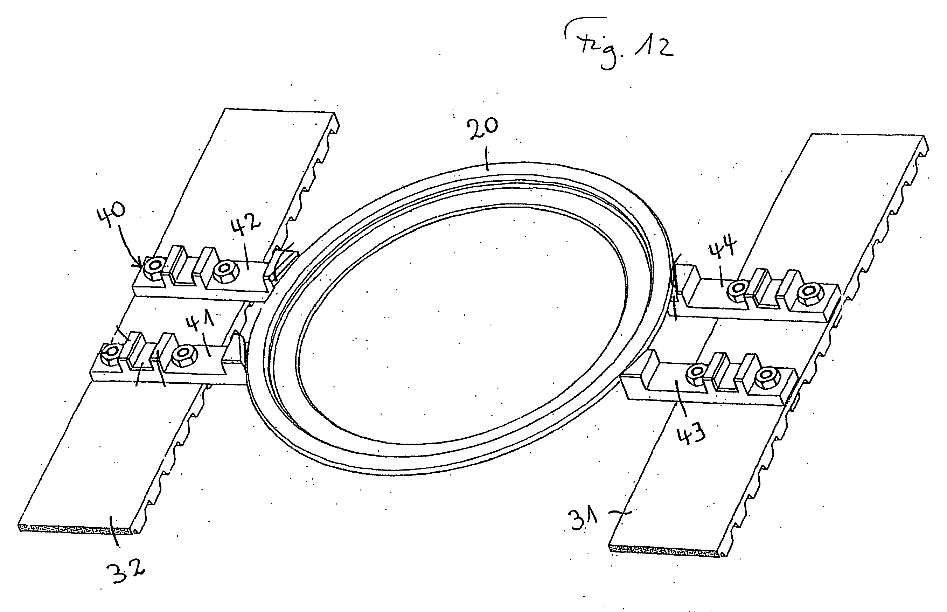

Die Figuren 8, 9 und 10 zeigen nun in vereinfachter Seitenansicht sowie Draufsicht und in schaubildlicher Darstellung ein Ausführungsbeispiel der Einrichtung zur Herstellung von Aufreissdeckeln gemäss der Erfindung in vereinfachter Darstellung. Dabei ist insbesondere der Abstapler vereinfacht dargestellt und die Bearbeitungsstationen sind nur dadurch angedeutet, dass an deren Position der jeweils zu bearbeitende Rohling bzw. Deckel oberhalb des Transportmittels dargestellt ist, da die Bearbeitungsstation den Rohling bzw. Deckel zur Bearbeitung von seiner Aufnahme im Transportmittel abgehoben hat. Die einzelnen Bearbeitungsstationen und der Abstapler sind dabei grundsätzlich für die Bearbeitungsoperationen bzw. für die Abstaplung gemäss dem Stand der Technik aufgebaut und dem Fachmann bekannt und müssen daher hier nicht im Detail erläutert werden. Hingegen wird das Sichern der Deckelrohlinge bzw. Deckel entlang des Herstellungsweges nachfolgend genauer gezeigt. Der Reihe nach bzw. der Abfolge im Herstellungsweg nach sind bei diesem Beispiel die Stationen wie nachfolgend erläutert angeordnet, womit sich gegenüber dem Beispiel der Figuren 1 bis 7 eine etwas modifizierte Herstellungsabfolge entlang des Herstellungsweges ergibt. Die Einrichtung 1 weist in diesem Beispiel ein Transportmittel 3 mit zwei parallelen Transportwegen auf, so dass zwei Ströme von Deckeln gleichzeitig hergestellt werden können. Es könnte auch nur ein Transportweg bereit gestellt sein oder es könnten mehr als zwei Transportwege vorgesehen sein. Das Transportmittel weist bevorzugt für jeden Transportweg zwei parallel in einem Abstand voneinander angeordnete umlaufend angetriebene Zahnriemen auf, an denen Nocken befestigt sind, was in den Figuren 8, 9 und 10 nicht dargestellt ist. Zwei einander gegenüberliegende Paare von Nocken bilden eine Aufnahme für einen Deckelrohling bzw. Deckel, wie dies aus der internationalen Patentanmeldung WO 2006/017953 bekannt ist, deren Inhalt hiermit durch Verweis aufgenommen ist. Zur kurzen Erläuterung eines solchen Transportmittels 3 zeigen die Figuren 11 und 12 in schaubildlicher Darstellung ein Transportmittel, welches zum taktweisen Fördern der Deckel zu den einzelnen Bearbeitungsstationen dient. Diese Bearbeitungsstationen sind auch in Figur 11 nicht gezeigt, es ist dem Fachmann aber klar, wie er diese entlang der Fördervorrichtung anordnen kann um die jeweilige Bearbeitung durchzuführen. In Figur 11 sind ebenfalls zwei Transportwege gezeigt. Diese können durch denselben Antrieb 33, 37 angetrieben sein oder über einen eigenen Antrieb verfügen. Mit dem dargestellten Transportmittel 3 können die Gegenstände bzw. Deckel mit hoher Taktzahl von z.B. 200 Deckeln pro Minute und mit genau reproduzierbaren Schrittlängen zu den Bearbeitungsstationen gefördert werden. Es ergibt sich ferner ein flexibles Konzept für einen grossen Formatbereich der Gegenstände bzw. Deckel, welches bei runden Deckeln z.B. von einem Durchmesser von 50 bis 200 mm reichen kann und auch diverse Rechteckformate z.B. für die gängigen Fischdosen aufnehmen kann. Das Transportmittel ist auf diese bevorzugte Weise als kompaktes Modul für einspurigen oder, wie gezeigt, mehrspurigen Aufbau konzipiert.

Bei der gezeigten bevorzugten Ausgestaltung weist das Transportmittel zwei Zahnriemen 31 und 32 auf, welche insbesondere mit ihren Oberflächen in der selben Ebene liegen, also koplanar verlaufen, und welche am Anfang und am Ende der Fördervorrichtung über Umlenkrollen 34, 36 geführt sind, so dass sich ein endloser Zahnriemenantrieb in der für die Anzahl der Bearbeitungsstationen notwendigen Länge ergibt. Die schrittweise, mit den Bearbeitungsstationen synchronisierte Zahnriemenbewegung wird durch einen Schrittmotor oder Servomotor bewirkt, welcher die Zahnriemen durch Zahnrollen antreibt, wie dies in der Figur 11 mit dem Motor 33 und der Antriebsachse 38 ersichtlich ist. Falls weitere Transportwege vorgesehen sind, so können deren Zahnriemen über denselben Motor über weitere Antriebsachsen angetrieben werden oder über einen eigenen motorischen Antrieb verfügen. Der Motor 33 wird durch eine Steuerung 37 zur Vornahme der schrittweisen Vorwärtsbewegung der Zahnriemen gesteuert, welche Steuerung 37 entweder eine gesamte Steuerung der Deckelherstellungseinrichtung ist, welche auch die Bearbeitungsstationen steuert, oder welche Steuerung 37 eine Steuerung nur für das Transportmittel ist, welche mit einer übergeordneten Steuerung für die Deckelherstellungseinrichtung kommuniziert. Der Motor 33 und die weiteren Antriebskomponenten für die Zahnriemen sind an einem Maschinengestell angeordnet, welches in der Figur nur durch die Füsse 35 angedeutet ist. An den Zahnriemen sind die Mitnehmer für die Deckel, insbesondere in der Form von Mitnehmernocken befestigt, welche die Aufnahmen für die Deckel bilden und welche in Figur 11 generell mit 40 bezeichnet sind, wobei die einander gegenüberliegenden Mitnehmer der Zahnriemen 31 und 32 eine Aufnahme für den jeweiligen Rohling bzw. Deckel bilden. Durch die Zahnriemenbewegung wird diese von den Mitnehmern 40 gebildete Aufnahme entlang des Förderweges und in Richtung des dargestellten Pfeils C vom Anfang des Transportmittels, welche sich hier motorseitig befindet, zur Ausgangsseite bei der Umlenkrolle 36 bewegt, wo sich die Auslassstation für die Deckel befindet. In der gezeigten Ausführungsform ist jeweils über dem Zahnriemen und über den Nocken 40 eine Abdeckung 50 vorgesehen, welche jeweils den Zahnriemen und einen Teil der Nocken abdeckt, was nachfolgend noch genauer erläutert wird. Im Bereich der Bearbeitungsstationen weist diese Abdeckung 50 jeweils eine Ausnehmung 52 auf, welche ein Herausnehmen der Gegenstände aus den Aufnahmen erlaubt damit der Gegenstand von den Nocken abgehoben und in der Bearbeitungsstation bearbeitet und nachfolgend wieder in die Aufnahme abgegeben werden kann. Zwischen den Bearbeitungsstationen sind in der Regel keine Ausnehmungen 52 vorgesehen, so dass dort das Abheben der Gegenstände von den Nocken durch die Abdeckung 50 blockiert wird. Zusätzlich zu dem Blockieren des Abhebens durch die Abdeckung 50 können die Mitnehmer auch magnetisch ausgestaltet sein, was ebenfalls ein Abheben der Gegenstände während des Förderschrittes verhindern kann, wenn der Gegenstand mindestens teilweise aus einem magnetisch festhaltbaren Material besteht. Bevorzugt ist es, wenn der Abstand der Zahnriemen 31 und 32 zueinander einstellbar ist, wodurch der Abstand der einander gegenüberliegenden Nocken 40 der beiden Zahnriemen einstellbar ist, um das Transportmittel an verschiedene Gegenstandsgrössen anpassen zu können. Dazu können beim Transportmittel Querverbindungen 58 vorgesehen sein, welche eine einfache Einstellung des Abstandes der Zahnriemen voneinander erlauben. Entsprechend wird auch die Antriebswelle 38 ausgestaltet, um diese Abstandseinstellung zu ermöglichen. In Figur 12 sind die generell mit 40 bezeichneten Mitnehmer als Mitnehmernocken 41 und 42 auf dem Zahnriemen 32 und als Mitnehmernocken 43 und 44 auf dem Zahnriemen 31 dargestellt und es ist ersichtlich, wie ein Deckelring 20 von den Mitnehmernocken getragen und transportierbar ist, wobei die Mitnehmer das Abheben des Deckelrings bzw. Deckels nach oben hin erlauben, was in den Bearbeitungsstationen notwendig ist und auch die Beschickung im Abstapler von oben her erlaubt.

Die Abstände der Mitnehmernocken zueinander auf dem jeweiligen Zahnriemen sind durch die Teilung des Zahnriemens und die Mitnehmerbefestigung gegeben. Dieser Abstand kann zur Anpassung an die Deckelgrösse derart geändert werden, dass die Zahnriemen gegen einen Satz anderer Zahnriemen mit in anderem Abstand voneinander befestigten Mitnehmernocken ausgetauscht werden. Auf diese Weise kann durch Abstandseinstellung der Zahnriemen zueinander und kann durch Auswechslung der Zahnriemen mit verschieden beabstandeten Mitnehmern ein grosser Aufnahmebereich für Gegenstände bzw. Deckel geschaffen werden. Auf diese Weise kann eine Umrüstung auf verschiedene Gegenstandsgrössen für alle Mitnehmer gleichzeitig erfolgen. Nachfolgend wird indes ein weiterer Aspekt der Erfindung erläutert, welcher die Bearbeitung von Deckeln verschiedener Grösse auf andere Weise erlaubt bzw. die Auswechslung der Zahnriemen für die Herstellung von Deckeln mit zwei unterschiedlichen Durchmessern unnötig macht.

Die Nocken 41 bis 44 sind auf bekannte Weise am Zahnriemen 31 bzw. 32 befestigt, indem der jeweilige Zahn des Zahnriemens abgetragen und durch ein Befestigungselement ersetzt wird, welches mit den Nocken verschraubt wird. Diese Befestigungsart ist dem Fachmann geläufig und wird hier nicht weiter dargestellt. Natürlich sind auch alle weiteren Befestigungsmöglichkeiten von Mitnehmern an Zahnriemen einsetzbar, so z.B. die Klebbefestigung von Mitnehmern.

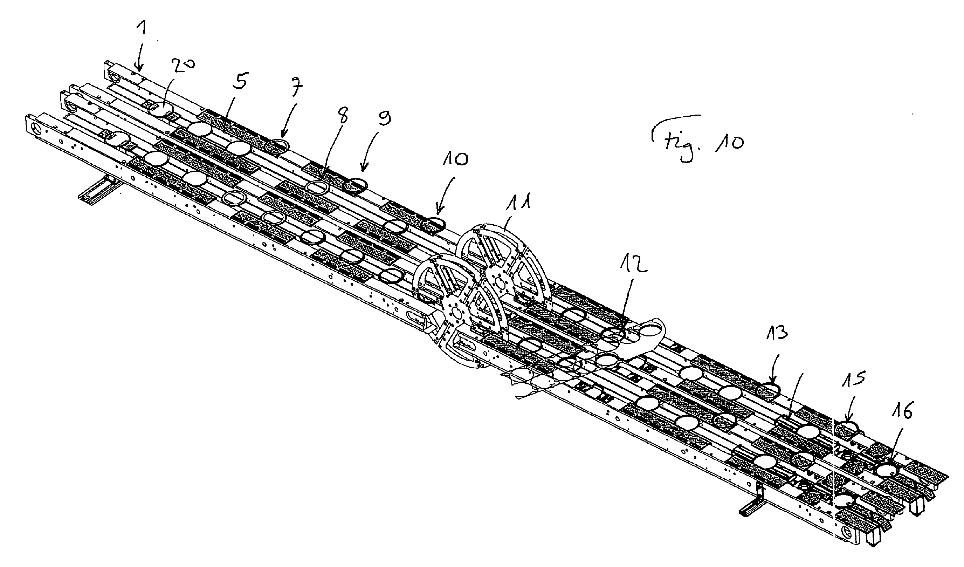

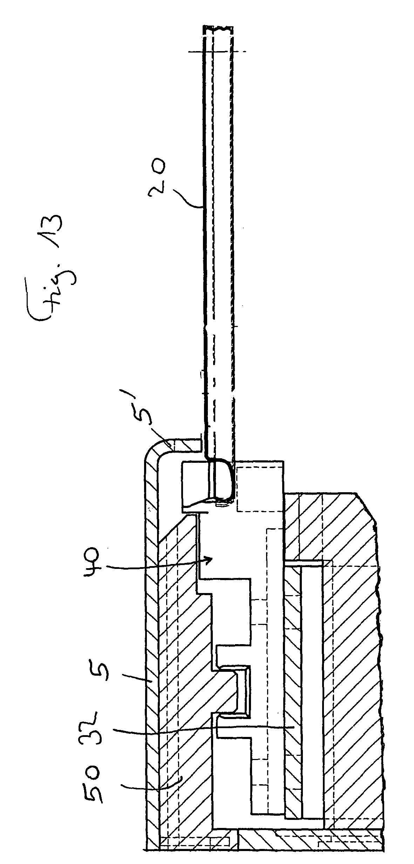

Zurückkommend zu den Figuren 8, 9 und 10 ist dargestellt, dass am Anfang eines solchen Transportmittels 3 ein Abstapler 4 vorgesehen ist, welcher die Deckelrohlinge 20 von zwei Stapeln nach unten hin getaktet freigibt und somit einzeln an die jeweils bereitstehenden Aufnahmen des Transportmittels 3 abgibt. Dies erfolgt in diesem Beispiel mit einer um 180 Grad gedrehten Anfangsstellung der Rohlinge, so dass die mit der Aufreissfolie zu versehende Seite der Rohlinge zunächst in der Figur 1 nach unten zu liegen kommt und entlang des Transportweges ein Wenden erfolgen muss, wenn die Aufreissfolie von oben her aufgebracht wird. Die wird nachfolgend noch erläutert. Die Figuren 9 und 10 zeigen je einen Rohling 20 in der entsprechenden Aufnahme des Transportmittels 3 unterhalb des Abstaplers. Die Deckelrohlinge werden ab dieser Position 2a entlang des Herstellweges bis zur Abgabe der fertigen Deckel dauernd gegen ein ungewolltes Abheben und Herausfallen aus der Aufnahme gesichert. Die erfolgt in der Aufnahme unterhalb des Abstaplers bevorzugt so, dass unterhalb der beiden Aufnahmen Luft angesaugt und somit ein Unterdruck unterhalb des Deckelrohlings erzeugt wird. Anschliessend an die nur gerade an dieser Position 2a wirkende Sicherung durch Unterdruck ist vorzugsweise ein zentraler Niederhalter 6 angeordnet, welcher oberhalb und mit geringem Abstand vom jeweiligen Rohling in der Längsachse des Transportmittels angeordnet ist, z.B. in Form einer breiten Schiene, die an der Unterseite des Abstaplers befestigt ist. Dieser Niederhalter wirkt als Sicherung während sich die Deckelrohlinge von der Position 2a in die folgende Position 2b bewegen. Gegebenenfalls erstreckt sich aber die Sicherung mittels Unterdruck auch vom Abstapelbereich weiter in Längsrichtung des Transportmittels bzw. weiter entlang des Herstellungswegs, allenfalls teilweise überschneidend mit der Sicherung durch den Niederhalter 6. Bevor der Niederhalter 6 in Längsrichtung endet, übernehmen seitliche Führungen 5 die Sicherung gegen das Abheben eines Deckelrohlings, der schrittweise aus der Position 2a unterhalb des Abstaplers in die beiden folgenden Positionen 2b und 2c transportiert wird, in welchen keine Bearbeitung erfolgt. Die seitlichen Führungen 5 sind (anstelle der Abdeckungen 50 nach Stand der Technik gemäss Figur 11) entsprechend Figur 13 (die nur eine Seite der Aufnahme zeigt) so ausgeführt, dass sie einen nach unten zum Rohling 20 bzw. zur Aufnahme des Transportmittels weisenden Steg 5' aufweisen. Dies ergibt eine gute Sicherung gegen das Abheben des Rohlings bei der Förderung durch das Transportmittel. Der Rohling 20 erreicht danach mit dem nächsten Transportschritt die Position 2d, in welcher erneut ein Stopp erfolgt und der Rohling die Bearbeitungsstation 7 erreicht hat, in welcher das Ausschneiden des Teils 27 erfolgt (Figur 2). Dies erfolgt auf bekannte Weise, indem die Bearbeitungsstation den Rohling aus der Aufnahme nach oben bewegt, wonach die Schneid- bzw. Stanzoperation gemäss Stand der Technik mittels eines Oberwerkzeugs und eines Unterwerkzeugs bzw. mittels Stempel und Matrize erfolgt. Die Sicherung gegen das Abheben an der Position 2d erfolgt mittels beweglichen Sicherungselementen, welche im gezeigten Beispiel von Figur 13 von im Oberwerkzeug 17 in Vertikalrichtung federnd angeordneten Niederhaltern 18 gebildet werden, welche sich in Längsrichtung des Transportweges erstrecken, wie in Figur 9 angedeutet. Diese Niederhalter 18 sichern gegen ein Abheben des Rohlings, indem sie in ihrer Ruhestellung in geringem Abstand oberhalb des Rohlings enden (mittels eines nicht dargestellten Anschlags, der den Weg der Niederhalter 18 nach unten in der Figur begrenzt). Die Niederhalter 18 beginnen und enden entlang des Transportweges so, dass sie mit den Abdeckungen 5 überschneidend angeordnet sind (Figur 9), so dass sie eine durchgehende Sicherung beim Transport des Rohlings von der Position 2c in die Bearbeitungsposition 2d ergibt und nach der Bearbeitung in die weitere Position 2e. Die mit den Federn 19 nach oben hin nachgebend angeordneten Niederhalter 18 kontaktieren den Rohling bei dessen Anheben durch das Unterwerkzeug, wenn der Rohling in die Bearbeitungsposition oberhalb der Aufnahme im Transportmittel gebracht wird, geben aber federnd nach, so dass sich keine Hinderung des Anhebens durch das Unterwerkzeug ergibt; die Niederhalter verhindern aber ein ungewolltes Abheben des Deckelrings alleine durch dessen Transportbewegung oder äussere Einflüsse bevor und nachdem das Unterwerkzeug den Deckelring angehoben bzw. wieder in die Aufnahme abgesetzt hat. In Figur 8 und Figur 10 ist das Schneiden bzw. die Bearbeitungsstation 7 lediglich durch den oberhalb seiner Aufnahme dargestellten Rohling 20 dargestellt.

In der Position 2e kann als Bearbeitungsschritt ein Oelen des Rohlings 20 als Vorbereitungsschritt für das nachfolgenden Ziehen des Randes (Figur 3) erfolgen, wobei in der Bearbeitungsstation 8 für das Oelen die Sicherung gegen das Abheben mit der Abdeckung 5 und dem Steg 5' erfolgen kann, wie in Figur 12 gezeigt.

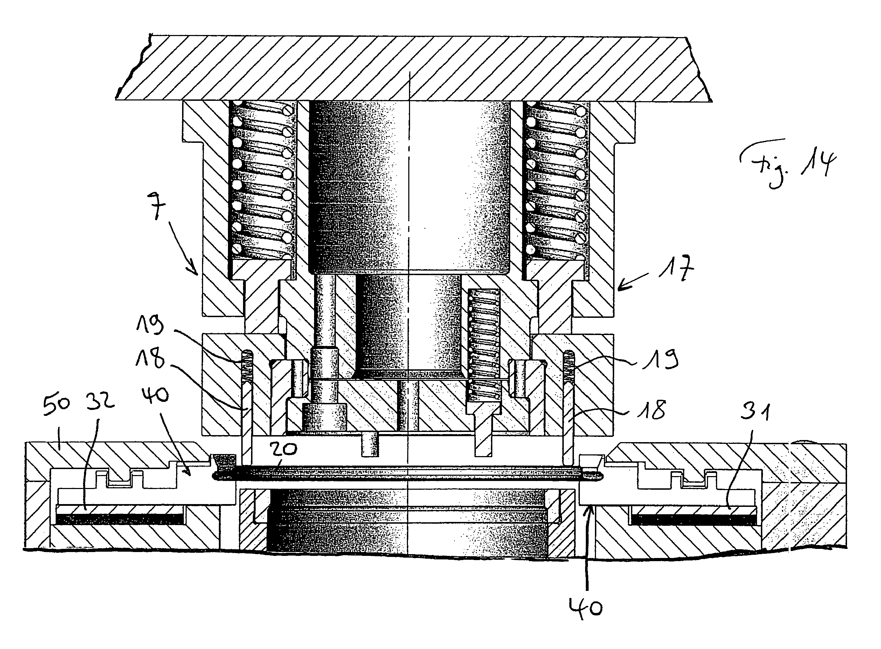

In der Position 2f entlang des Transportweges erfolgt das Ziehen des Randes der Entnahmeöffnung des Aufreissdeckels (Figur 3), wozu ebenfalls ein Oberwerkzeug und ein Unterwerkzeug in einer Bearbeitungsstation 8 vorgesehen sind, wie in Figur 14 dargestellt ist. Zur Sicherung gegen das Abheben des Rohlings vor dessen Halten im Werkzeug selber werden bevorzugt bewegliche Niederhalter analog der Lösung bei der Schneidbearbeitungsstation vorgesehen. In der Figur 14 ist eine Vertikalschnittansicht der Ziehbearbeitungsstation 9 gezeigt, in welcher ebenfalls bewegliche Niederhalter 18 vorgesehen sind. Dabei sind in dieser Schnittansicht die Federn nicht ersichtlich. Nach der Bearbeitung des Randes der Entnahmeöffnung durch das Ziehen erfolgt ein Transport des Rohlings mit dem gezogenen Rand in die Position 2g, in welcher keine Bearbeitung erfolgt, während mit diesem Transportschritt der nachfolgende Rohling in die Position 2f gelangt. In der Position 2g wird die Sicherung gegen das Abheben erneut mit der Abdeckung 5 und dem Steg 5' ausgeführt, wie in Figur 13 dargestellt. Diese Sicherung überschneidet sich in Transportrichtung mit den Niederhaltern 18 der Ziehbearbeitungsstation, so dass sich eine durchgehende bzw. ununterbrochene Sicherung ergibt.

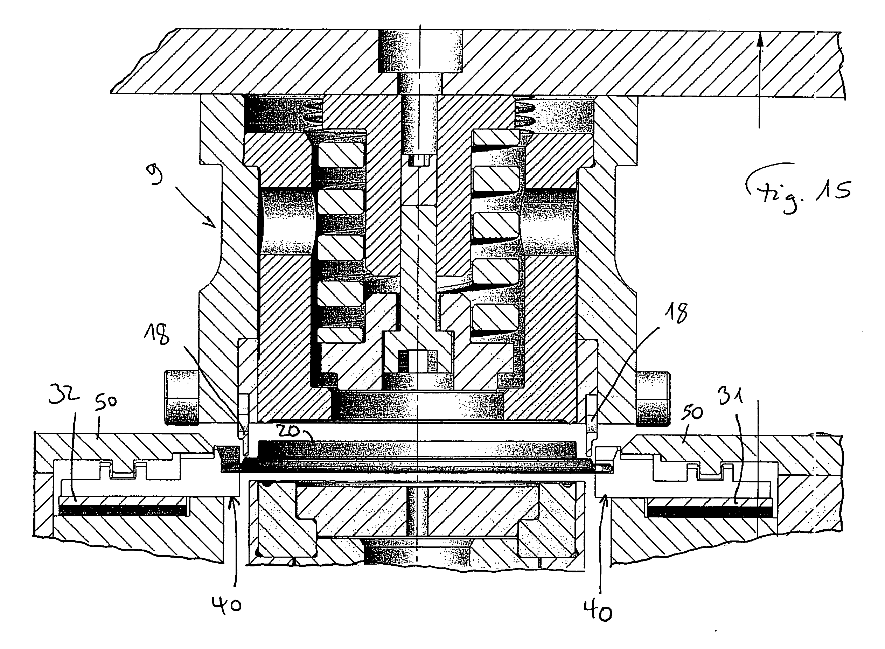

Danach erfolgt mit dem nächsten Transportschritt des Transportmittels eine Förderung des Rohlings 20 aus der Position 2g in die Bearbeitungsstation 10 bzw. in die Position 2h, in welcher das Rollen des gezogenen Randes erfolgt. In Abweichung zu den Figuren 1 bis 7 erfolgt somit bei diesem Ausführungsbeispiel das Rollen (Figur 6) bereits jetzt, bevor die Aufreissfolie aufgesiegelt wird. Bei der Rollbearbeitungsstation 10 sind als Sicherung gegen das Abheben bevorzugt wiederum im Oberwerkzeug bewegliche Niederhalter vorgesehen, insbesondere federnd bewegliche Niederhalter 18 mit Federn 19, wie dies in der vertikal geschnittenen Teilansicht dieser Bearbeitungsstation gemäss Figur 15 ersichtlich ist.

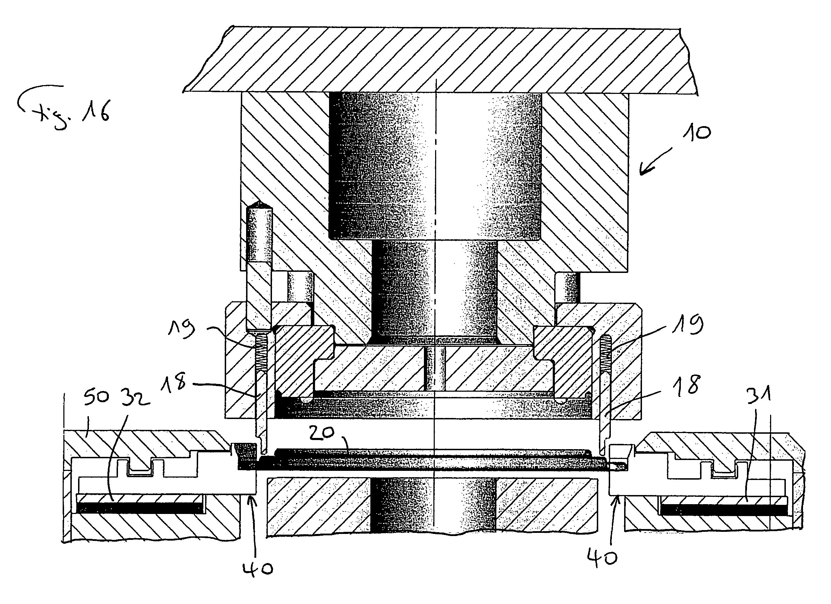

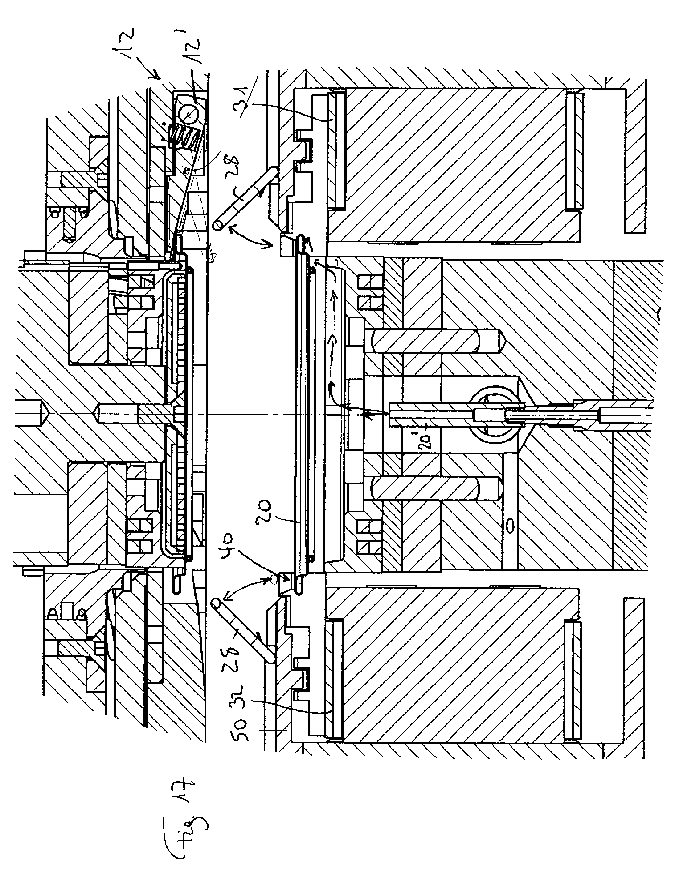

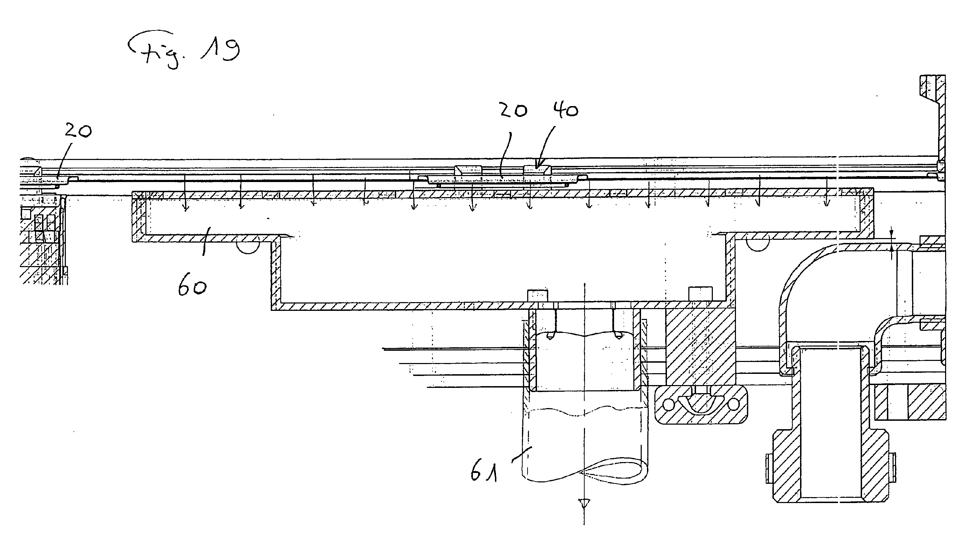

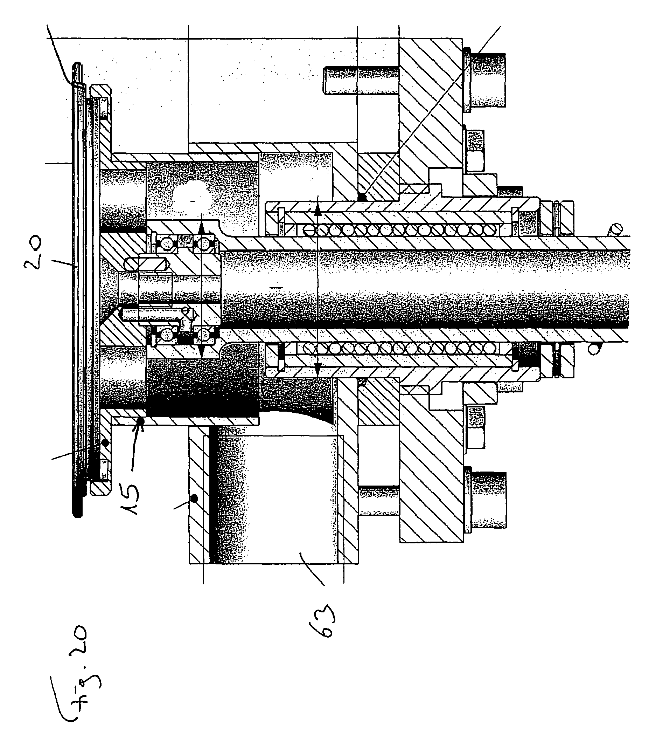

Anschliessend erfolgt mit dem Transport in die Wendestation 11 bzw. die Position 2i ein weiterer Schritt des Transportmittels. In der Wendestation wird der Rohling, der bereits zum Deckelring mit gezogenem und gerolltem Rand bearbeitet worden ist, um 180 gedreht, wie dies aus Figur 8 ersichtlich ist. Es erfolgt durch die Wendestation eine Entnahme des Deckelringes aus seiner Aufnahme im Transportmittel. Dabei ist bevorzugt beim Einbringen in die Wendestation durch das Transportmittel eine Sicherung dadurch gegeben, dass die Niederhalter 18 der Rollbearbeitungsstation so weit entlang des Transportmittels reichen, dass der Deckelring gesichert ist, bis er in der Wendestation selber gehalten ist; diese kann aber auch eigene Sicherungsmittel beim Einlauf in die Wendestation aufweisen. Bei der Übergabe aus der Wendestation nach dem Wenden in die bereitstehende Aufnahme des Transportmittels in der Position 2j erfolgt eine Sicherung durch die Wendestation bis erneut z.B. eine Abdeckung 5 mit dem Steg 5' die Sicherung entlang des Transportweges in den Positionen 2k und 2l übernimmt, wie in Figur 9 ersichtlich. Danach gelangt der Deckelring, nun mit derjenigen Seite nach oben angeordnet, die mit der Aufreissfolie versehen werden muss, in die Stanz- und Vorsiegelstation 12 bzw. in die Position 2m. In der Stanz- und Vorsiegelstation erfolgt die Sicherung gegen ein ungewolltes Abheben von der Aufnahme vorzugsweise durch bewegliche Sicherungselemente, welche durch schwenkbare Sicherungsbügel gebildet werden, wie in Figur 16 ersichtlich. Die Bügel bilden beim Eintritt des Deckelringes in diese Bearbeitungsstation in nach unten geschwenkter Lage die Sicherung gegen das Abheben. Beim Aufbringen der auf bekannte Weise oberhalb der Aufnahme aus einer Folienbahn der Aufreissfolie ausgestanzten runden Aufreissfolie auf den Deckelring werden die Bügel nach oben geschwenkt, da bei diesem Schritt das Siegelwerkzeug selber die Sicherung übernimmt. Da anschliessend der Deckel wieder eine geschlossene Oberfläche bildet, kann ab dem Öffnen des Vorsiegelwerkzeugs die Sicherung auch wieder mittels Unterdruck im Unterwerkzeug erfolgen. Entlang des nächsten Transportschrittes in die Position 2n kann ein zentral angeordneter Niederhalter 6 die Sicherung übernehmen und danach werden wiederum die Führungen 5 mit Steg 5' eingesetzt, um den Deckel mit der auf den Deckelring aufgebrachten und vorgesiegelten Aufreissfolie zu sichern. Dies gilt für die Positionen 2n und 2o, in welchen keine Bearbeitung stattfindet. Danach gelangt der Deckel in die Position 2p bzw. die Hauptsiegelstation 13, in welcher eine Sicherung einerseits mittels beweglichen, federnd angeordneten Niederhaltern erfolgen kann, wie in Figur 17 mit den Niederhaltern 18 und deren Federn 19 dargestellt. Es können Ausstossklinken 12' vorgesehen sein. Zusätzlich oder alternativ kann eine Sicherung durch Unterdruck erfolgen, während die Niederhalter nicht wirksam sind. In der Hauptsiegelstation erfolgt auf bekannte Weise das Fertigsiegeln der Aufreissfolie auf dem Deckelring, was dem Fachmann bekannt ist. Danach erfolgt der Transport in die Position 2q, in welcher keine Bearbeitung stattfinden kann und danach in die Position 2r, in welcher ein Kühlen der Siegelung und ein Ausrichten der Aufreisslasche der Aufreissfolie auf einem Drehteller auf an sich bekannte Weise stattfindet. Es ist aber eine Sicherung des Deckels auf dem Drehteller mittels Unterdruck vorgesehen. Sofern entlang des Transports in die Position 2q und weiter in die Position 2r keine Bearbeitung stattfindet, kann die Sicherung erneut mit der Abdeckung 5 und dem Steg 5' stattfinden, die als unbewegliche Sicherungselemente wirken. Falls als Option eine Inspektion der Siegelnaht entlang dieses Transportweges mit einer Inspektionsstation 14 stattfindet, so erfolgt die Sicherung vorzugsweise nur durch Unterdruck und die Abdeckungen 5 werden weggelassen, damit die Inspektionsstation einen freien Blick von oben auf die Siegelnaht hat. Die Figur 19 zeigt im Querschnitt einen Ansaugkasten 60 mit Öffnungen an seiner Oberseite und einem Luftansaugstutzen 61 an seiner Unterseite, über welchem die Deckel transportiert werden und durch den ein Sichern der Deckel mittels Unterdruck gegen ein Abheben beim Transport erfolgt. In der Position 2r mit der Kühlung der Siegelnaht und der Ausrichtung der Aufreisslasche erfolgt bevorzugt wie erwähnt eine Sicherung gegen das Abheben vom Drehteller dieser Bearbeitungsstation 15 durch Unterdruck, wie in Figur 20 ersichtlich, welche den Drehteller und den zugehörigen Unterdruckanschluss 63 zeigt. In der Bearbeitungsstation 16 bzw. der Position 2s erfolgt das Prägen der Aufreissfolie (Figur 6), wobei in der Prägestation vorzugsweise wiederum gefedert beweglich gehaltene, vertikal angeordnete Niederhalter zur Sicherung verwendet werden. Beim Transport zwischen den Positionen 2r und 2s können unbewegliche Führungen als Sicherungen eingesetzt werden. Beim weiteren Transport in die Auslaufstation 17 bzw. werden z.B. erneut Abdeckungen 5 mit Stegen 5' verwendet.

Die Unterdruckerzeugung erfolgt vorzugsweise zentral durch ein Sauggebläse und die Verteilung des Unterdrucks über Rohrleitungen in die Bearbeitungsstationen bzw. Transportabschnitte. Zum Lösen eines durch Unterdruck gehaltenen Deckels kann es vorgesehen werden, dass der Unterdruckbereich unterhalb des Deckels durch ein gesteuertes Ventil mit dem Umgebungsdruck verbunden wird oder mit einer Luftdruckquelle, die einen Überdruck erzeugt. Damit wird das Festhalten bzw. Sichern durch den Unterdruck rasch aufgehoben.

Es kann aber auch ein kurzzeitiges Sichern gegen das Abheben von Deckeln mittels eines Unterdrucks erfolgen, der von einer Überdruckluftdruckquelle erzeugt wird, was an Hand von Figur 17 erläutert wird. Es kann dort kurzzeitig über die mittige Zufuhr 20' von Luft mit Überdruck ein Luftstrom erzeugt werden, der um den noch nicht voll in der Aufnahme 40 liegenden Deckel 20 herum verläuft und durch den schnelleren Luftstrom durch den Spalt zwischen Aufnahme und Deckel dort einen lokalen Unterdruck erzeugt, der den Deckel in die Aufnahme zieht. Der Luftstrom muss dann abgeschaltet werden.

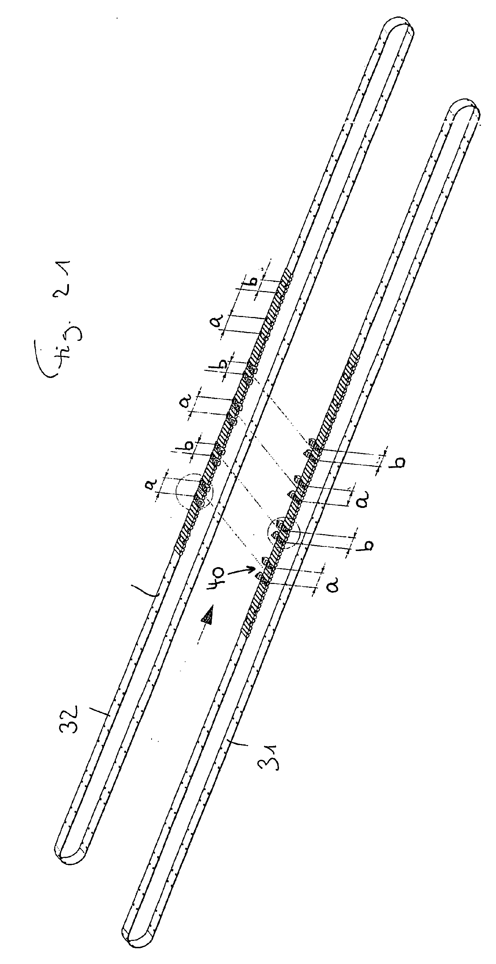

An Hand der Figur 21 wird nun ein weiterer Aspekt der Erfindung erläutert. Die Figur zeigt dabei die beiden parallel laufenden Zahnriemen 31 und 32 des Transportmittels mit einigen der daran angeordneten Aufnahmen 40 für die Deckelrohlinge bzw. Deckel, die von Mitnehmernocken gebildet werden. Gemäss der Erfindung sind nun Aufnahmen für zwei unterschiedliche Deckeldurchmesser abwechselnd aufeinander folgend an den Zahnriemen vorgesehen, so dass z.B. jeweils ein Nockenabstand a einander zugehöriger und zusammen eine Aufnahme bildender Mitnehmernocken von z.b. 30 mm von einem Nockenabstand b einander zugehöriger und zusammen eine Aufnahme bildender Mitnehmernocken von z.B. 40 mm und dann wieder ein Nockenabstand a von 30 mm und wieder ein Nockenabstand b von 40 mm usw. aufeinander folgen. Dies erlaubt auf einfache Weise und ohne Umrüstung des Transportmittels dessen Verwendung für zwei verschiedene Durchmesser von Deckelrohlingen bzw. Deckel. Wird die Einrichtung zur Herstellung von Aufreissdeckeln mit dem grösseren der beiden Durchmesser betrieben, so werden vom Abstapler nur die Aufnahmen mit den weiter voneinander beabstandeten Mitnehmernocken mit Deckelrohlingen beschickt. Das Transportmittel führt entsprechend jeweils jeden Transportschritt mit der doppelten Schrittlänge aus, da die Aufnahmen mit den näher zusammen liegenden Mitnehmernocken nicht benutzt werden und leer bleiben. Wird die Einrichtung zur Herstellung von Deckeln mit dem kleineren Durchmesser verwendet, so werden vom Abstapler nur die Aufnahmen mit den näher zusammen liegenden Nocken mit Deckelrohlingen beschickt. Auch in diesem Fall führt das Transportmittel Schritte mit der doppelten Schrittlänge aus, da jeweils die Aufnahmen mit den weiter voneinander weg liegenden Nocken nicht benutzt werden. Auf diese Weise können mit demselben Transportmittel ohne Umrüstung zwei verschiedene Deckelgrössen in der Einrichtung herstellt werden. Die Umrüstung beschränkt sich dann auf die Bearbeitungsstationen bzw. die dort verwendeten Werkzeuge, wie dies bekannt ist, indes unterbleibt die Auswechslung der Zahnriemen, die aufwändig ist.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Einrichtung (1) zur Herstellung von Deckeln (20) mit Aufreissfolie, umfassend ein lineares Transportmittel (3) für den Horizontaltransport entlang des Herstellungswegs, in welchem die Deckel entlang eines Teils des Herstellungswegs durch eine Führung (50) gegen ein Abheben in vertikaler Richtung gesichert sind, mindestens einen am Anfang des Transportmittels angeordneten Abstapler (4), welcher Deckelrohlinge von mindestens einem Stapel abstapelt und an das Transportmittel abgibt, eine entlang des Transportmittels angeordnete Abfolge von Bearbeitungsstationen (7-10,12-16), gegebenenfalls unterbrochen von einer Wendestation (11), und eine Auslaufstation (17) am Ende des linearen Transportmittels, **dadurch gekennzeichnet, dass** vom Abstapler bis zur Auslaufstation durchgehend wirksame Sicherungsmittel (5,5',6,18,28,60) für die als Rohling bis zum fertigen Deckel durch die Einrichtung geförderten Deckel vorgesehen sind, welche Sicherungsmittel die Deckelteile stets gegen ein unerwünschtes Abheben vom Transportmittel sichern.

2. Einrichtung nach Anspruch 1, **dadurch gekennzeichnet, dass** die Sicherungsmittel durch feststehende Sicherungselemente (5,5',6) und durch bewegliche Sicherungselemente (18,28), und insbesondere auch durch mittels Unterdruck wirkende Sicherungselemente (60), ausgeführt sind.

3. Einrichtung nach Anspruch 1 oder 2, **dadurch gekennzeichnet, dass** die als Sicherungsmittel beim Abstapler Unterdruck sowie feststehende Niederhalter vorgesehen sind.

4. Einrichtung nach einem der Ansprüche 1 bis 3, **dadurch gekennzeichnet, dass** in Bearbeitungsstationen bewegliche Sicherungselemente als Sicherungsmittel vorgesehen sind, wobei insbesondere die beweglichen Sicherungselemente durch federnd im oberen Werkzeugteil angeordnete Sicherungselemente (18) oder als bewegliche im unteren Werkzeugteil angeordnete Sicherungselemente (28) gebildet sind, und wobei insbesondere bewegliche Sicherungselemente in einer Schneidstation und/oder einer Ziehstation und/oder einer Rollstation und/oder in einer Prägestation vorgesehen sind.

5. Einrichtung nach einem der Ansprüche 1 bis 4, **dadurch gekennzeichnet, dass** die Sicherungsmittel in einer zwischen einer Schneidstation und einer Ziehstation liegenden Beölungsstation durch feststehende Sicherungsmittel, insbesondere durch beidseitig der Transportlängsachse liegende Abdeckungen mit Sicherungsstegen (5,5'), erfolgt.

6. Einrichtung nach einem der Ansprüche 1 bis 5, **dadurch gekennzeichnet, dass** in der Wendestation (11) feststehende Einlaufsegmente und Auslaufsegmente als Sicherungsmittel vorgesehen sind.

7. Einrichtung nach einem der Ansprüche 1 bis 6, **dadurch gekennzeichnet, dass** an einer Folienstanz- und Vorsiegelstation feststehende und bewegliche Sicherungselemente vorgesehen sind, wobei insbesondere im Bereich des oberen Siegelwerkzeugs als bewegliche Sicherungselemente Ausstossklinken und als feststehende Sicherungselemente Niederhalter (18, 19) vorgesehen sind, und dass insbesondere als Sicherungsmittel im unteren Siegelwerkzeug Unterdruck vorgesehen ist.

8. Einrichtung nach einem der Ansprüche 1 bis 7, **dadurch gekennzeichnet, dass** in einer Hauptsiegelstation feststehende und bewegliche Sicherungselemente vorgesehen sind, wobei insbesondere im Bereich des oberen Siegelwerkzeugs als bewegliche Sicherungselemente Ausstossklinken (12') und als feststehende Sicherungselemente Niederhalter (18, 19) vorgesehen sind, und dass insbesondere im unteren Siegelwerkzeug eine mittels Unterdruck wirkende Sicherung vorgesehen ist.

9. Einrichtung nach Anspruch 7 oder 8, **dadurch gekennzeichnet, dass** die Festhaltung durch Unterdruck durch eine gesteuerte Luftzufuhr unterbrechbar ist.

10. Einrichtung nach einem der Ansprüche 1 bis 9, **dadurch gekennzeichnet, dass** eine Inspektionsstation zur Prüfung, insbesondere zur optischen Prüfung, der Siegelnaht vorgesehen ist, bei welchem das Sicherungsmittel durch eine Unterdruckführung gebildet ist.

11. Einrichtung nach einem der Ansprüche 1 bis 10, **dadurch gekennzeichnet, dass** eine Kühl- und Laschenrichtstation vorgesehen ist, bei welcher an einem unteren Drehteller die Sicherung durch Festhalten des Deckels mittels Unterdruck vorgesehen ist.

12. Einrichtung nach einem der Ansprüche 1 bis 11, **dadurch gekennzeichnet, dass** in der Auslaufstation beidseits der Mittellängsachse des Transportmittels angeordnete Abdeckplatten mit Sicherungsstegen oberhalb der Transportebene sowie mindestens eine Mittelkufe unterhalb der Transportebene vorgesehen sind.

13. Einrichtung nach einem der Ansprüche 1 bis 12, **dadurch gekennzeichnet, dass** das Transportmittel von an umlaufenden Riemen (31,32), Bändern oder Ketten angeordneten Mitnehmernocken (40) gebildet ist und dass die Sicherung durch beidseits der Längsmittelachse des Transportmittels oberhalb der Transportebene angeordnete Abdeckplatten (5) mit nach unten weisenden Sicherungsstegen (5') gebildet ist.

14. Einrichtung nach einem der Ansprüche 1 bis 13 umfassend ein lineares Transportmittel (3) für den Horizontaltransport entlang des Herstellungswegs, welches Aufnahmen für die Deckelteile bildet, **dadurch gekennzeichnet, dass** auf jeder Seite der Längsmittelachse des Transportmittels aufeinander folgend jeweils eine Aufnahme bildende Mitnehmernocken mit zueinander unterschiedlichen Nockenabständen (a, b) angeordnet sind.

15. Verfahren zur Herstellung von Deckeln mit Aufreissfolie auf einer linearen Herstellungseinrichtung, auf welcher die Deckelrohlinge und Deckel abgestapelt und gefördert und dabei geschnitten, geölt, gezogen, gerollt und danach gewendet werden, worauf die Aufreissfolie aufgebracht und vorgesiegelt wird, eine Hauptsiegelung, gegebenenfalls eine Inspektion, eine Kühlung, eine Ausrichtung der Aufreisslasche und eine Prüfung erfolgt, **dadurch gekennzeichnet, dass** während dieser Schritte stets ein Sichern der Rohlinge bzw. Deckel gegen ein unerwünschtes Abheben vom Transportmittel erfolgt.

16. Verfahren nach Anspruch 15 mit den Merkmalen gemäss mindestens einem der Ansprüche 2 bis 14.
